# EUROPÄISCHE PATENTSCHRIFT

(11) **EP 3 292 058 B1**
(45) Veröffentlichungstag und Bekanntmachung des Hinweises auf die Patenterteilung: **12.06.2019**
(21) Anmeldenummer: 16716033.2
(22) Anmeldetag: 11.04.2016
(51) Int. Cl.: B65G 47/90, B65G 47/91, A22C 17/00, B25J 11/00, B25J 15/02, B65G 47/92

(54) **VERFAHREN UND VORRICHTUNG ZUM SORTIEREN UND/ODER FÖRDERN VON LEBENSMITTELPRODUKTEN**
METHOD AND APPARATUS FOR SORTING AND/OR CONVEYING FOOD PRODUCTS
PROCEDE ET DISPOSITIF DE TRI ET/OU DE TRANSPORT DE DENRÉES ALIMENTAIRES

(30) Priorität: 07.05.2015 DE 102015107134; 15.06.2015 DE 102015210943
(43) Veröffentlichungstag der Anmeldung: 14.03.2018
(73) Patentinhaber: GEA Food Solutions Germany GmbH, 35216 Biedenkopf-Wallau (DE)
(72) Erfinder: KRÖN, Tobias, 87437 Kempten (DE); MERK, Andreas, 87439 Kempten (DE); BOCHTLER, Alois, 87743 Egg (DE)
(74) Vertreter: Kutzenberger Wolff & Partner
(86) Internationale Anmeldenummer: PCT/EP2016/057924
(87) Internationale Veröffentlichungsnummer: WO 2016/177540

(56) Entgegenhaltungen:
- WO-A1-2010/134803
- DE-A1-102008 023 762
- DE-A1-102011 105 894
- JP-A- H06 246 576

## Beschreibung

### Stand der Technik

Die vorliegende Erfindung geht aus von einem Verfahren gemäß der Oberbegriff des Anspruchs 1. Solche Verfahren und die dazugehörigen Vorrichtungen sind aus dem Stand der Technik bekannt. Die Druckschrift DE 10 2011 105 894 A1 offenbart einen Verfahren nach dem Oberbergriff des Anspruchs 1 und die Druckschrift JP H06246576 A offenbart eine Vorrichtung nach dem Oberbergriff des Anspruchs 6. Beispielsweise offenbaren die Druckschriften DE 20 2010 010 157 U1 und DE 10 2011 105 894 A1 Sortier-, Förder- und Verpackungsanlagen mit Übergabestationen, die mit Hilfe von als Greifer ausgebildeten Aufnahmeelementen Lebensmittelprodukte von einer Zuführeinheit an Folgeförderer übergibt. Auch die Druckschrift WO 2010/134 803 A1 offenbart eine solche Förderanlage mit einem Greifer. Die bekannten Greifer dienen somit dazu, Lebensmittelprodukte an einem Ausgangsort aufzunehmen, an einen Zielort zu transportieren und dort abzulegen. Die Greifer weisen hierfür typischerweise zwei komplementär angeordnete ebene Aufnahmeelemente auf, welche sich beim Aufnehmen des Lebensmittelprodukts von außen an zwei gegenüberliegenden Seiten jeweils unter das Lebensmittelprodukt schieben und dann angehoben werden. Das Lebensmittelprodukt liegt dann auf den Aufnahmeelementen auf. Beim Ablegen des Lebensmittelprodukts werden die beiden Aufnahmeelemente auseinander gefahren. Es ist bekannt, während des Transports ein Fluid von unten gegen das Lebensmittelprodukt strömen zu lassen, um das Lebensmittelprodukt anzuheben Derlei Aufnahmeelemente können grundsätzlich auch dazu verwendet werden, die Lebensmittelprodukte nicht nur an einen Folgeförderer zu übergeben, sondern direkt in einer Verkaufs- oder Frischhalteverpackung abzulegen. Hierbei ist jedoch eine präzise Positionierung der Lebensmittelprodukte besonders wichtig.

Bei den bekannten Greifern besteht nun das Problem, dass das Lebensmittelprodukt beim Auseinanderfahren der Aufnahmeelemente seitlich leicht versetzt wird, da die Reibung zwischen dem Lebensmittelprodukt und den beiden Aufnahmeelementen nicht an beiden Aufnahmeelementen zu jedem Zeitpunkt beim Ablegen exakt gleich ist. Die genaue Positionierung des Lebensmittelprodukts ist somit hinfällig. Besonders nachteilig ist, wenn das Lebensmittelprodukt soweit seitlich versetzt wird, dass es auf der Kante der Verpackung liegen bleibt, weil dann eine manuelle Korrektur der Position notwendig wird.

### Offenbarung der Erfindung

Es ist daher eine Aufgabe der vorliegenden Erfindung ein Verfahren und eine Vorrichtung zum Sortieren und/oder Fördern von Lebensmittelprodukten, insbesondere Wurst, Schinken und/oder Käse, bereitzustellen, welche(s) eine präzise Positionierung des Lebensmittelprodukts beim Ablegen desselben in einer Zielposition ermöglicht und welche(s) zugleich möglichst einfach und kostengünstig realisierbar ist.

Die Aufgabe der vorliegenden Erfindung wird gelöst durch ein Verfahren zum Sortieren und/oder Fördern von Lebensmittelprodukten, insbesondere Wurst, Schinken und/oder Käse, nach dem Anspruch 1.

Das erfindungsgemäße Verfahren hat gegenüber dem Stand der Technik den Vorteil, dass durch das schaltbare Reibungsreduktionsmittel die Reibung zwischen dem Lebensmittelprodukt und dem Aufnahmeelement genau dann aufgehoben wird, wenn das Lebensmittelprodukt vom Aufnahmeelement in der Zielposition abgelegt wird. Ein seitliches Wegziehen des Aufnahmeelements führt somit nicht zu einem unerwünschten Versatz des Lebensmittelprodukts, so dass eine gegenüber dem Stand der Technik erheblich genauere Positionierung des Lebensmittelprodukts ermöglicht wird. Insbesondere wird verhindert, dass das Lebensmittelprodukt beim Ablegen in einer Verkaufs- oder Frischhalteverpackung auf dem Verpackungsrand abgelegt wird.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der Erfindung ist vorgesehen, dass das Reibungsreduktionsmittel wahlweise in einem eingeschaltetem Zustand, in welchem die Reibung zwischen dem Lebensmittelprodukt und dem Aufnahmeelement reduziert wird, oder in einem ausgeschalteten Zustand, in welchem die Reibung zwischen dem Lebensmittelprodukt und dem Aufnahmeelement unbeeinflusst bleibt, betrieben wird, wobei mittels einer Steuerungseinheit das Reibungsreduktionsmittel vor oder während dem Ablegen des Lebensmittelprodukts vom ausgeschalteten Zustand in den eingeschalteten Zustand geschaltet wird und/oder nach dem Ablegen des Lebensmittelprodukts vom eingeschalteten Zustand in den ausgeschalteten Zustand geschaltet wird. Vorteilhafterweise kann das Reibungsreduktionsmittel über die Steuerungseinheit zu- oder abgeschaltet wird, so dass das Reibungsreduktionsmittel insbesondere beim Ablegen der Lebensmittelprodukte Anwendung finden kann und die genaue Positionierung der Lebensmittelprodukte ermöglicht. Die Steuerungseinheit umfasst insbesondere einen elektronischen Controller, wie beispielsweise einen Mikrocontroller, einen Prozessor oder einen ASIC. Grundsätzlich wäre aber auch Steuerung ohne elektronische Controller möglich. Denkbar ist auch, dass Sensoren und/oder eine Software erkennt, wenn ein Ablegen eines Lebensmittelprodukts erfolgt oder bevorsteht, und sodann das Reibungsreduktionsmittel zugeschaltet wird.

Insbesondere weist das Aufnahmeelement eine Mehrzahl von Fluiddüsen auf, durch welche das Fluid in Richtung des Lebensmittelprodukts, also entgegen der Schwerkraft, ausströmt und auf diese Weise die Reibung zwischen Lebensmittelprodukt und Aufnahmeelement reduziert bzw. aufhebt. Das Fluid umfasst vorzugsweise Druckluft, durch welche das Lebensmittelprodukt vom Aufnahmeelement leicht abgehoben wird. Die Fluidaustrittsdüsen müssen nicht zwingend am Aufnahmeelement ausgebildet sein, sondern können auch unterhalb des Aufnahmeelements angeordnet sein. Das Aufnahmeelement ist in diesem dann Falle fluiddurchlässig, beispielsweise porös ausgebildet. Vorzugsweise wird beim Einschalten des Reibungsreduktionsmittel die Fluidbereitstellungseinheit in Betrieb genommen wird, ein zwischen der Fluidaustrittsdüse und der Fluidbereitstellungseinheit angeordnetes Ventil geöffnet wird und/oder die Fluidaustrittsdüse geöffnet. Die Fluidbereitstellungseinheit umfasst beispielsweise einen (Druckluft-)Kompressor und/oder eine Fluidpumpe und/oder eine Druckspeicher.

Alternativ wäre auch denkbar, dass das Reibungsreduktionsmittel eine Ladungseinheit umfasst, welche elektrisch, insbesondere positiv oder negativ, aufladbar ist. Vorzugsweise kann die Ladungseinheit positiv aufgeladen werden. Auf diese Weise kann beispielsweise die Reibung zwischen dem Aufnahmeelement und einem Lebensmittelprodukt, das Aminosäuren (positive Ladungen) aufweist, aufgehoben werden. Dies wird dadurch erreicht, dass sich die positiven Ladungen der Aminosäuren und der Ladungseinheit durch elektrische Wechselwirkungskräfte gegenseitig abstoßen.

Gemäß einer bevorzugten Ausführungsform der Erfindung ist vorgesehen, dass das Aufnehmen, Positionieren und Ablegen des Lebensmittel mittels zweier komplementär angeordneter Aufnahmeelemente erfolgt, welche sich beim Aufnehmen des Lebensmittelprodukts von zwei gegenüberliegenden Seite unter das Lebensmittelprodukt schieben und beim Ablegen des Lebensmittelprodukts wieder auseinanderfahren. Vorzugsweise ist jedes der beiden Aufnahmeelemente mit einem Reibungsreduktionmittel versehen, wobei die Reibungsreduktionsmittel insbesondere kurz vor oder während des Auseinanderfahrens der beiden Aufnahmeelemente eingeschaltet werden. Denkbar ist, dass die Steuerungseinheit die beiden Reibungsreduktionsmittel automatisch einschaltet, wenn die Aufnahmeelemente zum Ablegen des Lebensmittelprodukts auseinandergefahren werden. Die beiden Reibungsreduktionsmittel umfassen vorzugsweise eine Mehrzahl von Fluidaustrittsdüsen an jedem Aufnahmeelement, welche jeweils in Fluidverbindung mit einer einzigen gemeinsamen Fluidbereitstellungseinheit stehen.

Ein weiterer Gegenstand der vorliegenden Erfindung ist eine Vorrichtung zum Sortieren und/oder Fördern von Lebensmittelprodukten, insbesondere Wurst, Schinken und/oder Käse, nach dem Anspruch 6.

Die erfindungsgemäße Vorrichtung ist insbesondere zur Durchführung und Verwendung des erfindungsgemäßen Verfahrens geeignet und vorgesehen. Mit der erfindungsgemäßen Vorrichtung werden somit die gleichen vorstehend bereits erläuterten Vorteile, wie mit dem erfindungsgemäßen Verfahren erzielt. Insbesondere ermöglicht die erfindungsgemäße Vorrichtung ein genaues und präzises Ablegen von Lebensmittelprodukten an einer Zielposition, indem die Steuerungseinheit das Reibungsreduktionsmittel beim Ablegen der Lebensmittelprodukte einschaltet. Die erfindungsgemäße Vorrichtung ist somit gegenüber den aus dem Stand der Technik bekannten Vorrichtung in der Lage, die Reibungsreduktionsmittel gezielt und vorzugsweise ausschließlich beim Ablegen der Lebensmittelprodukte zu gebrauchen. Denkbar ist, dass das Reibungsreduktionsmittel nicht dauerhaft sondern nur beim Ablegen der Lebensmittelprodukte in Betrieb ist, so dass der Energieverbrauch der Vorrichtung gesenkt werden kann.

Gemäß einer bevorzugten Ausführungsform der Erfindung ist vorgesehen, dass das Reibungsreduktionmittel von der Steuerungseinheit derart schaltbar ist, dass es wahlweise in einem eingeschaltetem Zustand, in welchem die Reibung zwischen dem Lebensmittelprodukt und dem Aufnahmeelement reduziert wird, und einem ausgeschalteten Zustand, in welchem die Reibung zwischen dem Lebensmittelprodukt und dem Aufnahmeelement unbeeinflusst bleibt, betreibbar ist. Die Fluidbereitstellungseinheit ist vorzugsweise außerhalb des Aufnahmeelements installiert, so dass die Fluidbereitstellungseinheit nicht mit dem Aufnahmeelement mitbewegt werden muss. Die Fluidbereitstellungseinheit kann über ein starres und/oder flexibles Kanal-, Schlauch- und/oder Leitungssystem mit der Fluidaustrittsdüsen in dauerhafter Fluidverbindung stehen.

Gemäß einer bevorzugten Ausführungsform der Erfindung ist vorgesehen, dass das Aufnahmeelement mittels wenigstens eines Aktuators horizontal und/oder vertikal motorisch bewegbar ist, wobei der wenigstens eine Aktuator insbesondere von der Steuerungseinheit gesteuert wird. Insbesondere kann das Aufnahmeelement mittels des wenigstens einen Aktuators in alle drei Raumrichtungen unabhängig voneinander bewegt werden. Die Bewegung des Aufnahmeelements wird dabei von der Steuerungseinheit gesteuert.

Gemäß einer bevorzugten Ausführungsform der Erfindung ist vorgesehen, dass die Vorrichtung zwei komplementär angeordnete Aufnahmeelemente aufweist, welche mittels Aktuatoren derart bewegbar sind, dass sich beim Aufnehmen des Lebensmittelprodukts von zwei gegenüberliegenden Seiten unter das Lebensmittelprodukt schieben und beim Ablegen des Lebensmittelprodukts wieder auseinanderfahren. Vorzugsweise werden die beiden Aufnahmeelement beim Aufnehmen des Lebensmittelprodukts aufeinander zu bewegt und beim Ablegen des Lebensmittelprodukts auseinander gefahren. Vorzugsweise weisen beide Aufnahmeelemente jeweils Fluidaustrittsdüsen auf, wobei die Steuerungseinheit derart konfiguriert ist, dass das Reibungsreduktionsmittel kurz vor und während des Auseinanderfahrens der Aufnahmeelemente eingeschaltet ist. Beim oder vor dem Auseinanderfahren der beiden Aufnahmeelemente sind dann die jeweiligen Reibungsreduktionsmittel aktiv, so dass kein seitlicher Versatz des Lebensmittelprodukts in der Zielposition zu befürchten ist.

Gemäß einer bevorzugten Ausführungsform der Erfindung ist vorgesehen, dass die Vorrichtung einen Niederhalter aufweist, welcher zum Niederhalten des auf dem Aufnahmeelement aufliegenden Lebensmittelprodukts mittels einer Druckerzeugungseinheit, insbesondere eine Druckluftquelle, vorgesehen ist. Vorzugsweise ist die Steuerungseinheit derart konfiguriert, dass das beim Ablegen des Lebensmittelprodukts die Druckerzeugungseinheit abgeschaltet wird. Beim Abschalten wird insbesondere ein Ventil zwischen Druckerzeugungseinheit und Niederhalter geschlossen. Der Niederhalter übt beim Transport des auf den Aufnahmeelementen aufliegenden Lebensmittelprodukts von oben einen leichten Druck auf das Lebensmittelprodukt auf, so dass ein Verrutschen des Lebensmittelprodukts auf den Aufnahmeelementen verhindert wird.

Weitere Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figuren 1a, 1b**: zeigen schematische Schnittbildansicht einer Vorrichtung und eines Verfahrens gemäß einer beispielhaften Ausführungsform der vorliegenden Erfindung.
- **Figur 2**: zeigt eine schematische Detailansicht von Figur 1b.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

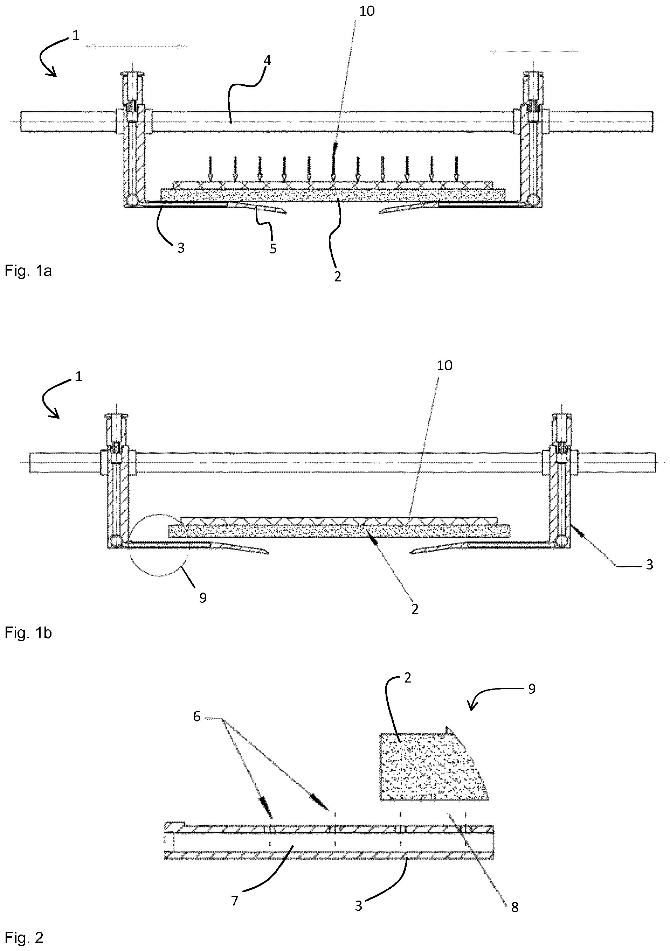

In **Figuren 1a, 1b** sind schematische Schnittbildansicht einer Vorrichtung 1 und eines Verfahrens zum Sortieren und/oder Fördern von Lebensmittelprodukten 2, insbesondere Wurst-, Schinken- und/oder Käsescheiben gemäß einer beispielhaften Ausführungsform der vorliegenden Erfindung dargestellt.

Die Vorrichtung 1 weist hierfür zwei komplementär ausgebildete Aufnahmeelemente 3 auf, welche an einem gemeinsamen Trägerelement 4 befestigt sind. Das Trägerelement 4 kann mittels nicht dargestellter Aktuatoren zumindest vertikal bewegt werden. Zudem können beide Aufnahmeelemente 3 jeweils horizontal entlang der Trägerelements 4 mittels weiterer nicht abgebildeter Aktuatoren bewegt werden. Die beiden Aufnahmeelemente 3 können sich somit aufeinander zu bewegen und wieder auseinander gefahren werden. Jede Aufnahmeelement 3 ist im Wesentlichen L-förmig ausgebildet und weist eine scharfe und insbesondere leicht flexible Ablösekante 5 auf.

Zum Aufnehmen von scheibenförmigen Lebensmittelprodukte 2 werden die beiden Aufnahmeelemente 3 auseinander gefahren und derart neben dem Lebensmittelprodukt 2 positioniert, dass sich die beiden Aufnahmeelemente 3 seitlich von außen unter das Lebensmittelprodukt 2 schieben, wenn die beiden Aufnahmeelemente 3 wieder zusammengefahren werden. Das Lebensmittelprodukt 2 liegt sodann -wie in Figur 1a illustriert - auf den beiden Aufnahmeelementen 3 teilweise auf. Anschließend wird das Lebensmittelprodukt 2 durch eine vertikale Bewegung des gesamten Trägerelements 4 angehoben und kann zu einer beliebigen Zielposition verfahren werden.

Im Bereich der Zielposition werden die beiden Aufnahmeelemente 3 vertikal abgesenkt und anschließend horizontal auseinander gefahren, um das Lebensmittelprodukt 2 an der Zielposition abzulegen. Damit das Lebensmittelprodukt 2 in der Zielposition durch das Auseinanderfahren der Aufnahmeelemente 3 weder in die eine Richtung noch in die andere Richtung seitlich versetzt wird, wird zumindest kurz vor dem Ablegen des Lebensmittelprodukts 2 mittels einer Steuerungseinheit (nicht dargestellt) ein schaltbares Reibungsreduktionsmittel jedes Aufnahmeelements 3 eingeschaltet, wodurch die Reibung zwischen den Aufnahmeelementen 3 und dem Lebensmittelprodukt 2 aufgehoben wird (Vgl. Figur 1b). Anhand von **Figur 2** wird das Reibungsreduktionsmittel näher erläutert. Dafür zeigt Figur 2 den Bereich 9 in einer Detailansicht.

Das schaltbare Reibungsreduktionsmittel umfasst eine Mehrzahl von Fluidaustrittsdüsen 6, welche jeweils in Form von mehreren Öffnungen an der Oberseite der horizontalen Auflageflächen beider Aufnahmeelemente 3 ausgebildet sind. Diese Fluidaustrittsdüsen 6 stehen in Fluidverbindung mit Fluidleitungen 7 innerhalb der Aufnahmeelemente 3. Mittels einer zentralen und nicht dargestellten Fluiderzeugungseinheit, insbesondere einem Kompressor bzw. einer Druckpumpe, wird in die Fluidleitungen 7 Druckluft eingeleitet, welche - sofern die Reibungsreduktionsmittel in Betrieb sind - aus den Fluidaustrittsdüsen 6 austritt und somit ein Luftbett 8 zwischen der Auflagefläche der Aufnahmeelemente 3 und dem Lebensmittelprodukt 2 erzeugt, auf welchem das Lebensmittelprodukt 2 bei Ablegen desselben in der Zielposition schwebt. Ein seitlicher Versatz beim Ablegen wird somit verhindert. Zum Einschalten der Reibungsreduktionsmittel kurz vor und/oder während des Ablegens durch das Steuerungsmittel wird entweder die Fluiderzeugungseinheit in Betrieb genommen oder ein Ventil zwischen der Fluiderzeugungseinheit und den Fluidaustrittsdüsen 6 geöffnet. Nachdem das Lebensmittelprodukt 2 abgelegt wurde, wird vorzugsweise die Fluiderzeugungseinheit wieder abgeschaltet oder das Ventil geschlossen.

Optional weist die Vorrichtung 1 ferner einen Niederhalter 10 auf. Der Niederhalter 10 kann von oben auf das Lebensmittelprodukt 2 verfahren werden, wodurch das Lebensmittelprodukt 2 auf den Aufnahmeelementen 3 fixiert wird und sich während des Transports nicht verschieben kann. Der Niederhalter 10 wird dazu mit Druckluft auf das Lebensmittelprodukt 2 gedrückt. Die Steuerungseinheit ist derart konfiguriert, dass vor dem Ablegen des Lebensmitteprodukts 2 an der Zielposition der Niederhalter 10 abgeschaltet bzw. drucklos geschaltet wird und anschließend das Reibungsreduktionsmittel eingeschaltet wird. Alternativ könnte das Reibungsreduktionsmittel aber auch schon vor dem Abschalten des Niederhalters 10 eingeschaltet werden.

## Patentansprüche

1. Verfahren zum Sortieren und/oder Fördern von Lebensmittelprodukten, insbesondere Wurst, Schinken und/oder Käse, aufweisend die folgenden Verfahrensschritte:
Aufnehmen des Lebensmittelprodukts (2) mittels eines Aufnahmeelements (3), positionieren des Lebensmittelprodukts (2) in einer Zielposition durch Bewegen des Aufnahmeelements (3) mittels wenigstens eines Aktuators und Ablegen des Lebensmittelprodukts (2) an der Zielposition, **dadurch gekennzeichnet, dass** beim Ablegen des Lebensmittelprodukts (2) ein schaltbares Reibungsreduktionsmittel zur Reduktion der Reibung zwischen dem Lebensmittelprodukt (2) und dem Aufnahmeelement (3) eingeschaltet wird, dass das Reibungsreduktionsmittel ein Fluidsystem mit einer am Aufnahmeelement (3) ausgebildeten Fluidaustrittsdüse (6) und einer mit der Fluidaustrittsdüse (6) in Fluidverbindung stehenden Fluidbereitstellungseinheit umfasst, wobei bei eingeschaltetem Reibungsreduktionmittel Fluid aus der Fluidaustrittdüse (6) in Richtung des Lebensmittelprodukts (2) ausgeströmt wird, und dass das Aufnahmeelement (3) in Form einer im Wesentlichen horizontalen ebenen Platte ausgebildet ist, wobei die Platte einen integrierten Fluidkanal (7) aufweist und wobei der Fluidkanal (7) in Fluidverbindung mit Öffnungen auf der Oberseite der Platte, welche als Fluidaustrittsdüsen (6) fungieren, steht.

2. Verfahren nach Anspruch 1, wobei das Reibungsreduktionsmittel wahlweise in einem eingeschaltetem Zustand, in welchem die Reibung zwischen dem Lebensmittelprodukt (2) und dem Aufnahmeelement (3) reduziert wird, oder in einem ausgeschalteten Zustand, in welchem die Reibung zwischen dem Lebensmittelprodukt (2) und dem Aufnahmeelement (3) unbeeinflusst bleibt, betrieben wird, wobei mittels einer Steuerungseinheit das Reibungsreduktionsmittel vor oder während dem Ablegen des Lebensmittelprodukts (2) vom ausgeschalteten Zustand in den eingeschalteten Zustand geschaltet wird und/oder nach dem Ablegen des Lebensmittelprodukts (2) vom eingeschalteten Zustand in den ausgeschalteten Zustand geschaltet wird.

3. Verfahren nach Anspruch 1, wobei beim Einschalten des Reibungsreduktionsmittels die Fluidbereitstellungseinheit in Betrieb genommen wird, ein zwischen der Fluidaustrittsdüse (6) und der Fluidbereitstellungseinheit angeordnetes Ventil geöffnet wird und/oder die Fluidaustrittsdüse (6) geöffnet wird.

4. Verfahren nach einem der vorhergehenden Ansprüche, wobei das Aufnehmen, Positionieren und Ablegen des Lebensmittelprodukts (3) mittels zweier komplementär angeordneter Aufnahmeelemente (3) erfolgt, welche sich beim Aufnehmen des Lebensmittelprodukts (2) von zwei gegenüberliegenden Seite unter das Lebensmittelprodukt (2) schieben und beim Ablegen des Lebensmittelprodukts (2) wieder auseinanderfahren.

5. Verfahren nach Anspruch 4, wobei jedes der beiden Aufnahmeelemente (3) mit einem Reibungsreduktionsmittel versehen ist und wobei die Reibungsreduktionsmittel beim Auseinanderfahren der beiden Aufnahmeelemente (3) eingeschaltet werden.

6. Vorrichtung (1) zum Sortieren und/oder Fördern von Lebensmittelprodukten (2), insbesondere Wurst, Schinken und/oder Käse, aufweisend wenigstens ein Aufnahmeelement (3), welches zum Aufnehmen, Positionieren und Ablegen eines Lebensmittelprodukts (2) vorgesehen ist, wobei das Aufnahmeelement (3) in Form einer im Wesentlichen horizontalen ebenen Platte ausgebildet ist, wobei die Platte einen integrierten Fluidkanal (7) aufweist und wobei der Fluidkanal (7) in Fluidverbindung mit Öffnungen auf der Oberseite der Platte, welche als Fluidaustrittsdüsen (6) fungieren, steht, wobei die Vorrichtung (1) ein mittels einer Steuerungseinheit schaltbares Reibungsreduktionsmittel zur Reduktion der Reibung zwischen dem Lebensmittelprodukt (2) und dem Aufnahmeelement (3) aufweist, wobei die Steuerungseinheit derart konfiguriert ist, dass das Reibungsreduktionsmittel beim Ablegen des Lebensmittelprodukts (2) eingeschaltet ist, wobei das Reibungsreduktionsmittel ein Fluidsystem mit einer am Aufnahmeelement (3) ausgebildeten Fluidaustrittdüse (6) und einem mit der Fluidaustrittsdüse (6) in Fluidverbindung stehenden Fluidbereitstellungseinheit aufweist, **dadurch gekennzeichnet, dass** jedes Aufnahmeelement (3) im Wesentlichen L-förmig ausgebildet ist und eine scharfe und insbesondere leicht flexible Ablösekante (5) aufweist.

7. Vorrichtung (1) nach Anspruch 6, wobei das Reibungsreduktionmittel von der Steuerungseinheit derart schaltbar ist, dass es wahlweise in einem eingeschalteten Zustand, in welchem die Reibung zwischen dem Lebensmittelprodukt (2) und dem Aufnahmeelement (3) reduziert wird, und einem ausgeschalteten Zustand, in welchem die Reibung zwischen dem Lebensmittelprodukt (2) und dem Aufnahmeelement (3) unbeeinflusst bleibt, betreibbar ist.

8. Vorrichtung (1) nach einem der Ansprüche 6 bis 7, wobei das Aufnahmeelement (3) mittels wenigstens eines Aktuators horizontal und/oder vertikal motorisch bewegbar ist, wobei der wenigstens eine Aktuator insbesondere von der Steuerungseinheit gesteuert wird.

9. Vorrichtung (1) nach einem der Ansprüche 6 bis 8, wobei die Vorrichtung (1) zwei komplementär angeordnete Aufnahmeelemente (3) aufweist, welche mittels Aktuatoren derart bewegbar sind, dass sich beim Aufnehmen des Lebensmittelprodukts (2) von zwei gegenüberliegenden Seiten unter das Lebensmittelprodukt (2) schieben und beim Ablegen des Lebensmittelprodukts (2) wieder auseinanderfahren.

10. Vorrichtung (1) nach Anspruch 9, wobei beide Aufnahmeelemente (3) jeweils Fluidaustrittsdüsen (6) aufweisen, wobei die Steuerungseinheit derart konfiguriert ist, dass das Reibungsreduktionsmittel zumindest beim Auseinanderfahren der Aufnahmeelemente (3) eingeschaltet ist.

11. Vorrichtung (1) nach einem der Ansprüche 6 bis 10, wobei die Vorrichtung (1) einen Niederhalter (10) aufweist, welcher zum Niederhalten des auf dem Aufnahmeelement (3) aufliegenden Lebensmittelprodukts (2) mittels einer Druckerzeugungseinheit, insbesondere eine Druckluftquelle, vorgesehen ist.

12. Vorrichtung (1) nach Anspruch 11, wobei die Steuerungseinheit derart konfiguriert ist, dass beim Ablegen des Lebensmittelprodukts (2) die Druckerzeugungseinheit abgeschaltet wird, wobei insbesondere ein Ventil zwischen Druckerzeugungseinheit und Niederhalter (10) geschlossen wird.

## Claims

1. Method for sorting and/or conveying food products, in particular sausage, ham and/or cheese, having the following method steps:
receiving the food product (2) by means of a receiving element (3), positioning the food product (2) in a target position, by virtue of the receiving element (3) being moved by means of at least one actuator, and depositing the food product (2) at the target position, **characterized in that**, when the food product (2) is being deposited, a switchable friction-reduction means for reducing the friction between the food product (2) and the receiving element (3) is switched on, **in that** the friction-reduction means comprises a fluid system having a fluid-exit nozzle (6), which is formed on the receiving element (3), and a fluid-supply unit, which is in fluid connection with the fluid-exit nozzle (6), wherein, when the friction-reduction means is switched on, fluid flows out of the fluid-exit nozzle (6) in the direction of the food product (2), and **in that** the receiving element (3) is designed in the form of an essentially horizontal, planar plate, wherein the plate has an integrated fluid channel (7), and wherein the fluid channel (7) is in fluid connection with openings on the upper side of the plate, said openings functioning as fluid-exit nozzles (6).

2. Method according to Claim 1, wherein the friction-reduction means is operated optionally in a switched-on state, in which the friction between the food product (2) and the receiving element (3) is reduced, or in a switched-off state, in which the friction between the food product (2) and the receiving element (3) remains unaffected, wherein a control unit is used to switch the friction-reduction means from the switched-off state to the switched-on state before or during the operation of the food product (2) being deposited and/or from the switched-on state into the switched-off state following the operation of the food product (2) being deposited.

3. Method according to Claim 1, wherein, when the friction-reduction means is switched on, the fluid-supply unit is brought into operation, a valve arranged between the fluid-exit nozzle (6) and the food-supply unit is opened and/or the fluid-exit nozzle (6) is opened.

4. Method according to one of the preceding claims, wherein the food product (3) is received, positioned and deposited by means of two complementary-arrangement receiving elements (3) which, when the food product (2) is being received, are pushed themselves beneath the food product (2) from two opposite sides and, when the food product (2) is being deposited, move apart from one another again.

5. Method according to Claim 4, wherein each of the two receiving elements (3) is provided with a friction-reduction means, and wherein the friction-reduction means are switched on when the two receiving elements (3) are moving apart from one another.

6. Apparatus (1) for sorting and/or conveying food products (2), in particular sausage, ham and/or cheese, having at least one receiving element (3), which is provided for receiving, positioning and depositing a food product (2), wherein the receiving element (3) is designed in the form of an essentially horizontal, planar plate, wherein the plate has an integrated fluid channel (7), and wherein the fluid channel (7) is in fluid connection with openings on the upper side of the plate, said openings functioning as food-exit nozzles (6), wherein the apparatus (1) has a friction-reduction means for reducing the friction between the food product (2) and the receiving element (3), it being possible for said friction-reduction means to be switched by means of a control unit, wherein the control unit is configured such that the friction-reduction means is switched on when the food product (2) is being deposited, wherein the friction-reduction means has a fluid system having a fluid-exit nozzle (6), which is formed on the receiving element (3), and a fluid-supply unit, which is in fluid connection with the fluid-exit nozzle (6), **characterized in that** each receiving element (3) is of essentially L-shaped design and has a sharp and, in particular, slightly flexible separating edge (5) .

7. Apparatus (1) according to Claim 6, wherein the friction-reduction means can be switched by the control unit such that it can be operated optionally in a switched-on state, in which the friction between the food product (2) and the receiving element (3) is reduced, and a switched-off state, in which the friction between the food product (2) and the receiving element (3) remains unaffected.

8. Apparatus (1) according to either of Claims 6 and 7, wherein the receiving element (3) can be moved horizontally and/or vertically in a motorized manner by means of at least one actuator, wherein the at least one actuator is controlled, in particular, by the control unit.

9. Apparatus (1) according to one of Claims 6 to 8, wherein the apparatus (1) has two complementary-arrangement receiving elements (3), which can be moved by means of actuators such that, when the food product (2) is being received, are pushed beneath the food product (2) from two opposite sides and, when the food product (2) is being deposited, move apart from one another again.

10. Apparatus (1) according to Claim 9, wherein the two receiving elements (3) each have fluid-exit nozzles (6), wherein the control unit is configured such that the friction-reduction means is switched on at least when the receiving elements (3) are moving apart from one another.

11. Apparatus (1) according to one of Claims 6 to 10, wherein the apparatus (1) has a holding-down means (10), which is provided so that the food product (2) resting on the receiving element (3) is held down by means of a pressure-generating unit, in particular a compressed-air source.

12. Apparatus (1) according to Claim 11, wherein the control unit is configured such that the pressure-generating unit is switched off when the food product (2) is being deposited, wherein in particular a valve between the pressure-generating unit and holding-down means (10) is closed.

## Revendications

1. Procédé de tri et/ou de transport de denrées alimentaires, en particulier de saucisse, de jambon et/ou de fromage, présentant les étapes de procédé suivantes:
recevoir la denrée alimentaire (2) au moyen d'un élément de réception (3),
positionner la denrée alimentaire dans une position visée par déplacement de l'élément de réception (3) au moyen d'au moins un actionneur, et
déposer la denrée alimentaire (2) dans la position visée,
**caractérisé en ce que** lors du dépôt de la denrée alimentaire (2) on enclenche un moyen de réduction du frottement commutable afin de réduire le frottement entre la denrée alimentaire (2) et l'élément de réception (3), **en ce que** le moyen de réduction du frottement comprend un circuit de fluide avec une buse de sortie de fluide (6) formée sur l'élément de réception (3) et une unité de fourniture de fluide en liaison fluidique avec la buse de sortie de fluide (6), dans lequel, lorsque le moyen de réduction du frottement est enclenché, du fluide s'écoule hors de la buse de sortie de fluide (6) en direction de la denrée alimentaire (2), et **en ce que** l'élément de réception (3) est réalisé sous la forme d'une plaque plane essentiellement horizontale, dans lequel la plaque présente un canal de fluide intégré (7) et dans lequel le canal de fluide (7) est en liaison fluidique avec des ouvertures prévues sur le côté supérieur de la plaque, qui font office de buses de sortie de fluide (6).

2. Procédé selon la revendication 1, dans lequel on fait fonctionner le moyen de réduction du frottement au choix dans un état enclenché, dans lequel le frottement entre la denrée alimentaire (2) et l'élément de réception (3) est réduit, ou dans un état déclenché, dans lequel le frottement entre la denrée alimentaire (2) et l'élément de réception (3) n'est pas influencé, dans lequel on commute au moyen d'une unité de commande le moyen de réduction du frottement avant ou pendant le dépôt de la denrée alimentaire (2) de l'état déclenché à l'état enclenché et/ou on le commute après le dépôt de la denrée alimentaire (2) de l'état enclenché à l'état déclenché.

3. Procédé selon la revendication 1, dans lequel lors de l'enclenchement du moyen de réduction du frottement on met en marche l'unité de fourniture de fluide, on ouvre une soupape disposée entre la buse de sortie de fluide (6) et l'unité de fourniture de fluide et/ou on ouvre la buse de sortie de fluide (6).

4. Procédé selon l'une quelconque des revendications précédentes, dans lequel on effectue la réception, le positionnement et le dépôt de la denrée alimentaire (3) au moyen de deux éléments de réception (3) disposés de façon complémentaire, qui lors de la réception de la denrée alimentaire (2) se glissent par deux côtés opposés en dessous de la denrée alimentaire (2) et lors du dépôt de la denrée alimentaire (2) s'écartent de nouveau l'un de l'autre.

5. Procédé selon la revendication 4, dans lequel chacun des deux éléments de réception (3) est muni d'un moyen de réduction du frottement et dans lequel on enclenche les moyens de réduction du frottement lors de l'écartement des deux éléments de réception (3).

6. Dispositif (1) de tri et/ou de transport de denrées alimentaires (2), en particulier de saucisse, de jambon et/ou de fromage, présentant au moins un élément de réception (3), qui est prévu pour la réception, le positionnement et le dépôt d'une denrée alimentaire (2), dans lequel l'élément de réception (3) est réalisé sous la forme d'une plaque plane essentiellement horizontale, dans lequel la plaque présente un canal de fluide intégré (7) et dans lequel le canal de fluide (7) est en liaison fluidique avec des ouvertures prévues sur le côté supérieur de la plaque, qui font office de buses de sortie de fluide (6), dans lequel le dispositif (1) présente un moyen de réduction du frottement commutable au moyen d'une unité de commande pour la réduction du frottement entre la denrée alimentaire (2) et l'élément de réception (3), dans lequel l'unité de commande est configurée de telle manière que le moyen de réduction du frottement soit enclenché lors du dépôt de la denrée alimentaire (2), dans lequel le moyen de réduction du frottement présente un circuit de fluide avec une buse de sortie de fluide (6) formée sur l'élément de réception (3) et une unité de fourniture de fluide en liaison fluidique avec la buse de sortie de fluide (6), **caractérisé en ce que** chaque élément de réception (3) est réalisé essentiellement en forme de L et présente un bord de décharge (5) effilé et en particulier aisément flexible.

7. Dispositif (1) selon la revendication 6, dans lequel le moyen de réduction du frottement peut être commuté par l'unité de commande de telle manière qu'il puisse fonctionner au choix dans un état enclenché, dans lequel le frottement entre la denrée alimentaire (2) et l'élément de réception (3) est réduit, et un état déclenché, dans lequel le frottement entre la denrée alimentaire (2) et l'élément de réception (3) n'est pas influencé.

8. Dispositif (1) selon une des revendications 6 à 7, dans lequel l'élément de réception (3) est déplaçable horizontalement et/ou verticalement par un moteur au moyen d'au moins un actionneur, dans lequel ledit au moins un actionneur est commandé en particulier par l'unité de commande.

9. Dispositif (1) selon l'une quelconque des revendications 6 à 8, dans lequel le dispositif (1) présente deux éléments de réception (3) disposés de façon complémentaire, qui peuvent être déplacés au moyen d'actionneurs, de telle manière que lors de la réception de la denrée alimentaire (2) se glissent par deux côtés opposés en dessous de la denrée alimentaire (2) et que lors du dépôt de la denrée alimentaire (2) s'écartent de nouveau l'un de l'autre.

10. Dispositif (1) selon la revendication 9, dans lequel les deux éléments de réception (3) présentent respectivement des buses de sortie de fluide (6), dans lequel l'unité de commande est configurée de telle manière que le moyen de réduction du frottement soit enclenché au moins lors de l'écartement des éléments de réception (3).

11. Dispositif (1) selon l'une quelconque des revendications 6 à 10, dans lequel le dispositif (1) présente un élément de maintien (10), qui est prévu pour maintenir la denrée alimentaire (2) déposée sur l'élément de réception (3) au moyen d'une unité de production de pression, en particulier une source d'air comprimé.

12. Dispositif (1) selon la revendication 11, dans lequel l'unité de commande est configurée de telle manière que l'unité de production de pression soit déclenchée lors du dépôt de la denrée alimentaire (2), dans lequel en particulier une soupape entre l'unité de production de pression et l'élément de maintien (10) est fermée.
